# EUROPEAN PATENT APPLICATION

(11) **EP 4 439 806 A1**
(43) Date of publication of application: **02.10.2024**
(21) Application number: 23765966.9
(22) Date of filing: 07.03.2023
(51) Int. Cl.: H01M 50/102

(54) **ALUMINUM LAMINATED FILM FOR BATTERY, BATTERY, AND VEHICLE**

(30) Priority: 07.03.2022 CN 202210216296
(71) Applicant: BYD Company Limited, Shenzhen, Guangdong 518118 (CN)
(72) Inventor: LUO, Jiancheng, Shenzhen, Guangdong 518118 (CN); YUAN, Wansong, Shenzhen, Guangdong 518118 (CN); WANG, Xinyue, Shenzhen, Guangdong 518118 (CN); ZHAO, Yukai, Shenzhen, Guangdong 518118 (CN); DUAN, Pingan, Shenzhen, Guangdong 518118 (CN)
(74) Representative: Arnold & Siedsma
(86) International application number: PCT/CN2023/079972
(87) International publication number: WO 2023/169388

(57) **Abstract**

An aluminum plastic film of a battery, a battery and a vehicle are provided. The aluminum plastic film of a batter includes a pit and a flanging. The pit is used for placing a battery pole core and has a bottom surface, a first side elevation connected to the bottom surface and a second side elevation connected to the bottom surface. The first side elevation and the second side elevation are connected to each other. A first lower arc chamfer is formed at the joint of the bottom surface and the first side elevation, and a second lower arc chamfer is formed at the joint of the bottom surface and the second side elevation. The flanging is located at the upper periphery rim of the pit and connected to the upper end of the side elevation. A first upper arc chamfer is formed at the joint of the first side elevation and the flanging, and a second upper arc chamfer is formed at the joint of the second side elevation and the flanging.

## Description

### CROSS-REFERENCE TO RELATED APPLICATIONS

This application claims priority to Chinese Patent Application No. 202210216296.5, filed with the China Patent Office on March 7, 2022, and entitled "ALUMINUM PLASTIC FILM OF BATTERY AND BATTERY", the entire contents of which is incorporated herein by reference.

### FIELD

The application relates to the technical field of battery energy, and in particular to an aluminum plastic film of a battery, a battery and a vehicle.

### BACKGROUND

A pouch battery is a liquid lithium-ion battery covered with a layer of polymer shell, which has been widely used in the field of battery energy because of its high safety performance.

Pouch batteries generally use an aluminum plastic film to package a pole core in structure. By punching and stretching the aluminum plastic film, a pit punching structure is formed, and the pole core is packaged in the pit punching structure to complete the package. The pit punching structure of the aluminum plastic film directly affects the quality of the aluminum plastic film after pit punching and the matching degree with the pole core. In the prior art, due to the fact that the matching degree of the pit punching structure formed by punching on the aluminum plastic film and the pole core is not high, the joint of the pole core and the tab is extruded, and the pole core easily moves in the aluminum plastic film, reducing the safety performance of the battery pack.

### SUMMARY

One of the purposes of the present application is to provide a new technical solution for an aluminum plastic film of a battery and a battery.

According to a first aspect of the present application, there is provided an aluminum plastic film of a battery including:
a pit configured to accommodate a pole core of the battery, the pit having a bottom surface, a first side elevation connected to the bottom surface and a second side elevation connected to the bottom surface, wherein the first side elevation and the second side elevation are connected to each other, and a first lower arc chamfer is formed at a joint of the bottom surface and the first side elevation, as well as a second lower arc chamfer is formed at a joint of the bottom surface and the second side elevation; and
a flanging located at the upper periphery rim of the pit, wherein the flanging is connected to the upper ends of the first side elevation and the upper ends of the second side elevation, and a first upper arc chamfer is formed at the joint of the first side elevation and the flanging, as well as a second upper arc chamfer is formed at the joint of the second side elevation and the flanging, wherein
in an X direction, a first distance is formed between the lower edge of the first upper arc chamfer of the first side elevation and the upper edge of the first lower arc chamfer; and
in a Z direction, a second distance is formed between the lower edge of the second upper arc chamfer of the second side elevation and the upper edge of the second lower arc chamfer, and the first distance is longer than the second distance; wherein
the X direction is an extension direction of a tab of the battery when the pole core of the battery is located in the pit, and the Z direction is perpendicular to the X direction.

In an embodiment, the first distance is 2 to 6 times longer than the second distance.

In an embodiment, the first distance is between 1mm and 3mm, and the second distance is between 0.5mm to 1mm.

In an embodiment, the radius of the first lower arc chamfer is 1.5 to 3 times the size of the radius of the first upper arc chamfer; and/or the radius of the second lower arc chamfer is 1.5 to 3 times the size of the radius of the second upper arc chamfer.

In an embodiment, the radius of the first upper arc chamfer is between 1mm and 2mm, and the radius of the first lower arc chamfer is between 1.5mm and 3mm; and / or the radius of the second upper arc chamfer is between 1mm and 2mm, and the radius of the second lower arc chamfer is between 1.5mm to 3mm.

In an embodiment, included angles formed by the intersecting first side elevation , the second side elevation and the bottom surface are spherical angles, and the radius of the spherical angle is 3 to 6 times the size of the radius of the first upper arc chamfer, or the radius of the spherical angle is 2 to 4 times the size of the radius of the first lower arc chamfer; and /or the radius of the spherical angle is 3 to 6 times the size of the radius of the second upper arc chamfer, or the radius of the spherical angle is 2 to 4 times the size of the radius of the second lower arc chamfer.

In an embodiment, when the depth of the pit is between 8mm and 12mm, the second distance is between 1mm and 1.5mm, and the radius of the second upper arc chamfer is between 1.5mm and 2mm.

In an embodiment, when the depth of the pit is less than or equal to 8mm, the second distance is between 0.5mm and 1mm, and the radius of the second upper arc chamfer is between 1mm and 1.5mm.

In an embodiment, a first surface is disposed between the first upper arc chamfer and the first lower arc chamfer on the first side elevation, and the first surface is a flat surface.

In an embodiment, a second surface is disposed between the second upper arc chamfer and the second lower arc chamfer on the second side elevation, and the second surface is a flat surface.

In an embodiment, the first included angle between the first surface and the bottom surface is smaller than the second included angle between the second surface and the bottom surface.

According to a second aspect of this application, there is provided a battery including:
A pole core; and
the aluminum plastic film according to the first aspect, wherein
both ends of the pole core are provided with a tab respectively, and an arc-shaped transition region is formed on the tab at the end which is close to the pole core; and
the pole core is located in the pit, and the arc-shaped transition region is faced to the first side elevation of the pit.

In an embodiment, the battery includes two aluminum plastic films, and the two aluminum plastic films are buckled together and wrapped outside of the pole core.

According to a third aspect of the present disclosure, there is provided a vehicle including the battery according to the second aspect.

According to the application, the lower arc chamfer is disposed at the joint of the bottom surface of the pit of the aluminum plastic film and the side elevation, and the upper arc chamfer is disposed at the joint of the side elevation and the flanging, so that a first distance is formed between the lower edge of the upper arc chamfer and the upper edge of the lower arc chamfer in the X direction, and a second distance is formed in the Z direction, and the matching performance of the pole core and the aluminum plastic film is improved. In addition, the first distance is longer than the second distance, so that the state of the pole core in the aluminum plastic film can be effectively controlled, not only the extrusion stress at the joint of the pole core and the tab may be reduced, but also the movement of the pole core in the aluminum plastic film may be effectively restrained, thereby improving the safety performance of the battery.

Through the detailed description of the exemplary embodiments of this application in the following drawings, the other features and advantages of this application will become clear.

### BRIEF DESCRIPTION OF THE DRAWINGS

The accompanying drawings, which are incorporated in and constitute a part of the specification, illustrate embodiments of the present application and serve to explain the principles of the present application together with the description.
FIG.1 is a schematic diagram illustrating an aluminum plastic film of a battery according to this application.
FIG.2 is a partially enlarged view of D (spherical angle) in FIG. 1.
FIG.3 is a schematic diagram illustrating an aluminum plastic film of a battery equipped with a pole core according to this application.
FIG.4 is a schematic cross-sectional view of FIG.3 on the YZ plane.
FIG.5 is a schematic diagram of a second distance formed along the Z direction according to this application (a partial schematic diagram at C in FIG.4).
FIG.6 is a schematic diagram illustrating a first distance formed along an X direction according to this application.
FIG.7 is a partially enlarged view of E in FIG.6.
FIG.8 is a schematic structural diagram illustrating a pole core according to this application.
FIG.9 is a schematic diagram illustrating a vehicle according to this application.

1. Aluminum plastic film; 10. Battery; 11.Pit; 12.Flanging; 13a.First upper arc chamfer; 13b.Second upper arc chamfer; 130a.Lower edge of the first upper arc chamfer; 130b.Lower edge of the second upper arc chamfer; 14a.First lower arc chamfer; 14b.Second lower arc chamfer; 140a.Upper edge of the first lower arc chamfer; 140b.Upper edge of the second lower arc chamfer; 15.Spherical angle; 16.Bottom surface; 17a.First side elevation; 17b.Second side elevation; 2.Pole core; 20.Gap; 21.Tab; 22.Arc-shaped transition region; 23.Connecting piece; 24.Extension region; 100.Vehicle; a. First distance; b. Second distance; α. First included angle; β. Second included angle.

### DETAILED DESCRIPTION

Various exemplary embodiments of the present application will be described in detail with reference to the accompanying drawings. It should be noted that the relative arrangement of components and steps, numerical expressions, and numerical values set forth in these examples do not limit the scope of the present application unless otherwise specifically stated.

The following description of at least one exemplary embodiment is merely illustrative in nature and is in no way intended to limit the application or its application or uses.

Techniques, methods and devices known to those of ordinary skill in the relevant art may not be discussed in detail, but where appropriate, such techniques, methods and devices should be considered a part of the specification.

In all examples shown and discussed herein, any specific values are to be construed as illustrative only and not as limiting. Accordingly, other examples of the exemplary embodiments may have different values.

It should be noted that similar reference numerals and letters refer to similar items in the following figures, so that once an item is defined in one figure, it does not require further discussion in subsequent figures.

The pole core of the pouch battery is generally heat-packaged by the aluminum plastic film, and the matching degree between the pole core and the tab on the pole core and the aluminum plastic film directly affects the safety performance and the life of the pouch battery. The pole core of the battery will be welded together with the tab of the single-layer foil during ultrasonic pre-welding. Since the body of the pole core is thicker and the tab of the foil is thinner, a transition region will be formed between the thinner tab of the foil and the thicker body of the pole core after ultrasonic pre-welding. The transition region is generally arc-shaped.

In the prior art, the structure matching degree between the aluminum plastic film and the transition region of the tab is generally not high, so that the transition region is easily extruded by the aluminum plastic film, thereby reducing the safety performance of the tab. In addition, due to the fact that the matching degree between the aluminum plastic film and the pole core body is not high, the pole core cannot be well restrained and moves easily in the aluminum plastic film, and the safety performance of the battery is reduced.

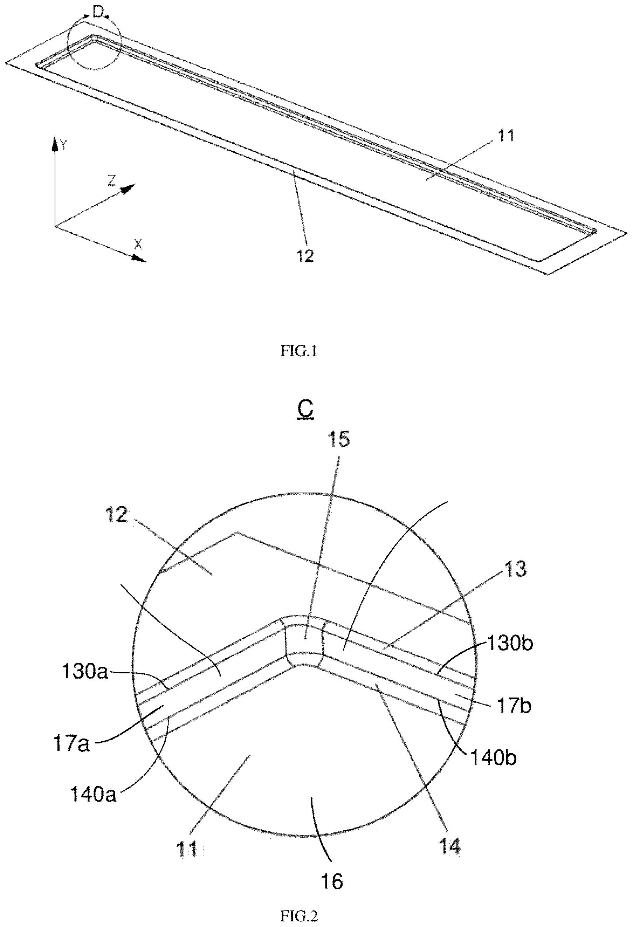

As shown in FIG.1 to FIG.8, according to the first aspect of the present application, an aluminum plastic film 1 of a battery is provided which includes: a pit 11 located on the aluminum plastic film 1 for placing a pole core 2 of the battery, and a flanging 12 located at the upper periphery rim of the pit 11. The pit 11 has a bottom surface 16, a first side elevation 17a and a second side elevation 17b, both of which are connected to the bottom surface 16. The first side elevation 17a and the second side elevation 17b are connected to each other, and a first lower arc chamfer 14a is formed at the joint of the bottom surface 16 and the first side elevation 17a, as well as a second lower arc chamfer 14b is formed at the joint of the bottom surface 16 and the second side elevation 17b. The flanging 12 is located on the upper periphery rim of the pit 11. The flanging 12 is connected to the upper ends of the first side elevation 17a and the upper ends of the second side elevation 17b, and a first upper arc chamfer 13a is formed at the joint of the first side elevation 17a and the flanging 12, as well as a second upper arc chamfer 13b is formed at the joint of the second side elevation 17b and the flanging 12. In an X direction, a first distance a is formed between the lower edge 130a of the first upper arc chamfer 13a of the first side elevation 17a and the upper edge 140a of the first lower arc chamfer 14a. In the Z direction, a second distance b is formed between the lower edge 130b of the second upper arc chamfer 13b of the second side elevation 17b and the upper edge 140b of the second lower arc chamfer 14b, and the first distance a is longer than the second distance b. The X direction is the extension direction of the tab 21 of the battery when the pole core 2 of the battery is located in the pit 11, and the Z direction is perpendicular to the X direction. In some embodiments, the arc chamfer may be a rounded corner.

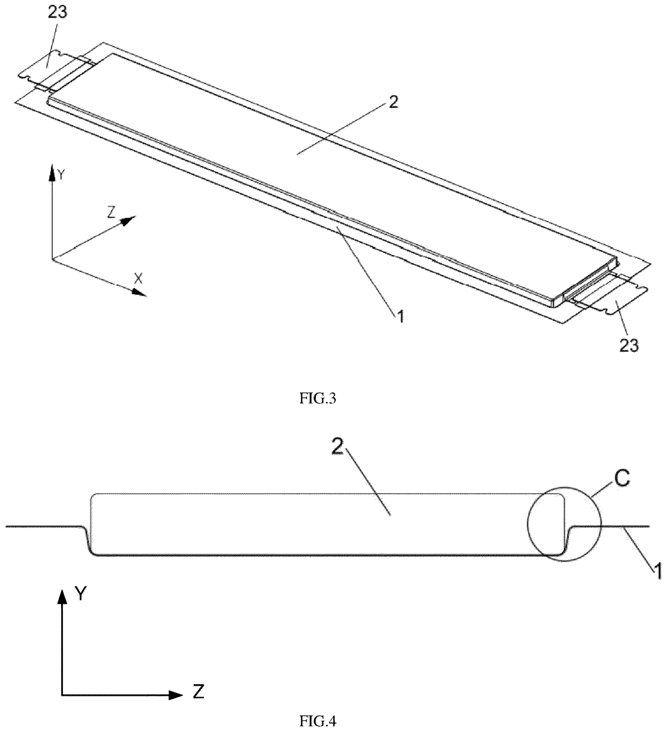

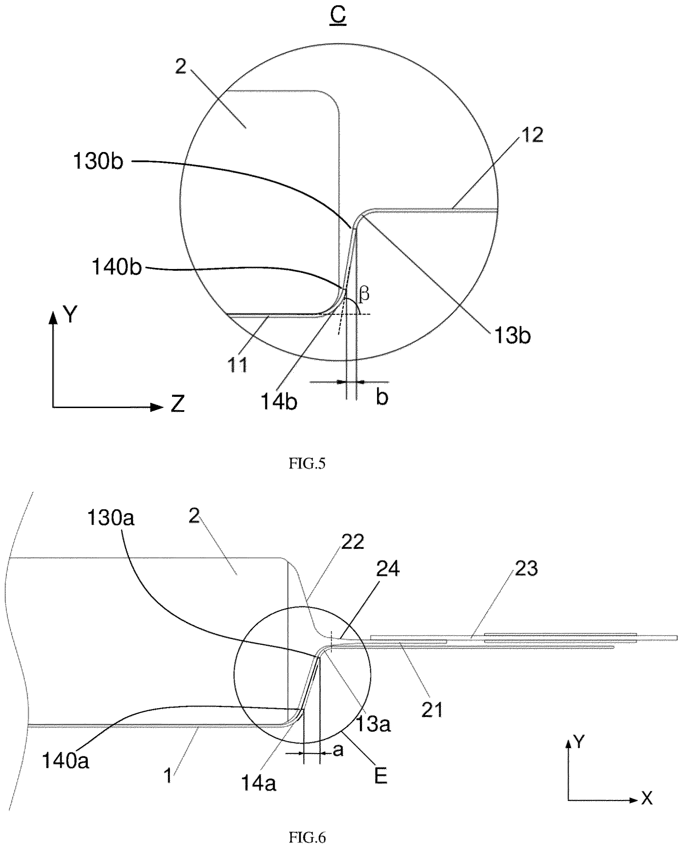

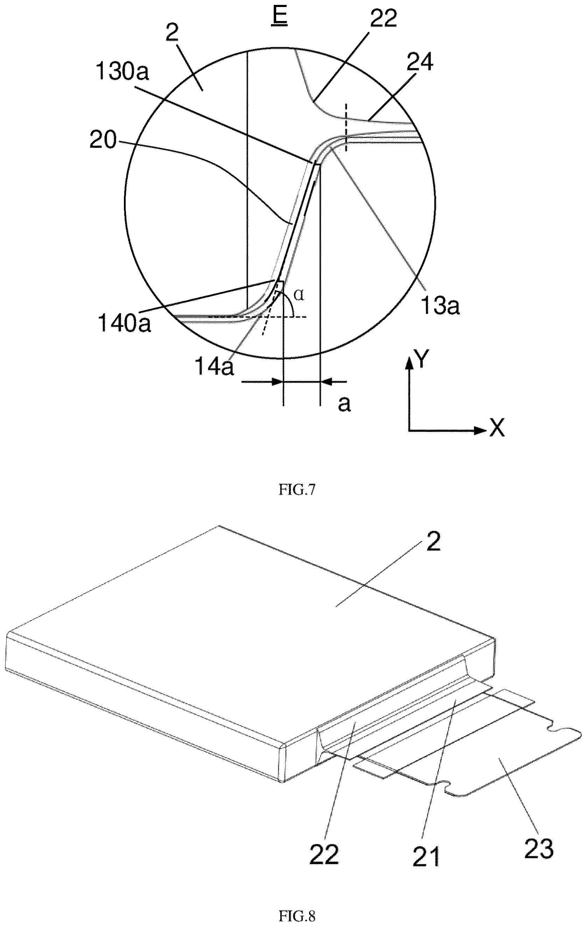

In particular, referring to FIG.1, the aluminum plastic film 1 of the battery 10 provided by the present application includes a pit 11 located on the aluminum plastic film 1 and a flanging 12 located at the upper periphery rim of the pit 11, that is, the flanging 12 is located at the opening of the pit 11. Referring to FIG.3 and FIG.8, generally, the pole core 2 of the battery is placed in the pit 11, and the tab 21 of the pole core 2 or a connecting piece 23 connected to the tab 21 is located on the flanging 12. In one embodiment, the connecting piece 23 is used for current transmission. The battery 10 outputs or inputs current through the connecting piece 23. The matching degree between the pole core 2 and the pit 11 affects the safety performance of the entire battery. The aluminum plastic film 1 of the present application is provided with the first lower arc chamfer 14a at the joint of the bottom surface 16 of the pit 11 and the first side elevation 17a, the second lower arc chamfer 14b at the joint of the bottom surface of the pit 11 and the second side elevation 17b, the first upper arc chamfer 13a at the joint of the first side elevation 17a of the pit 11 and the flanging 12, and the second upper arc chamfer 13b at the joint of the second side elevation 17b of the pit 11 and the flanging 12. In the X direction, the first distance (see a in FIG.6) is formed between the lower edge 130a of the first upper arc chamfer 13a of the first side elevation 17a and the upper edge 140a of the first lower arc chamfer 14a, and in the Z direction, the second distance (see b in FIG.5) is formed between the lower edge 130b of the second upper arc chamfer 13b of the second side elevation 17b and the upper edge 140b of the second lower arc chamfer 14b. Referring to FIGS.5 to 6, the first distance a and the second distance b are arranged so that the first side elevation 17a and the second side elevation 17b of the pit 11 of the aluminum plastic film 1 form a certain slope in the Z direction and the X direction. In one embodiment, referring to FIG.6, the slope of the first side elevation 17a of the pit 11 extending in the Z direction refers to a ratio of a projection height in the Y-axis of the first side elevation 17a to a projection width in the X-axis of the first side elevation 17a extending in the Z direction. Referring to FIG. 5, the slope of the second side elevation 17b of the pit 11 extending in the X direction refers to a ratio of the projection height in the Y-axis of the second side elevation 17b to the projection width in the Z-axis of the second side elevation 17b extending in the X direction.

After placing the pole core 2 with the tab 21 into the pit 11, the tab 21 is placed along the X direction. As shown in FIG. 6, the slope formed by the first side elevation 17a of the pit 11 extending along the X direction may match the shape of the arc-shaped transition region 22 of the tab 21, so that the arc-shaped transition region 22 is not extruded by the upper arc chamfer 13 of the pit 11, reducing the stress of the tab 21 and improving the safety performance of the tab 21. In addition, as shown in FIG. 5, the slope formed by the second side elevation 17b of the pit 11 extending along the X direction can effectively constrain the pole core 2, preventing the pole core 2 from moving in the pit 11 of the aluminum plastic film 1, and improving the safety performance of the battery. As shown in FIG. 1 and FIG. 3, the X direction is the extension direction of the tab 21 after the pole core 2 is placed in the pit 11, and the Z direction is the direction perpendicular to the X direction. In addition, in this embodiment, the first distance a is preferably longer than the second distance b, so that the state of the pole core 2 in the pit 11 of the aluminum plastic film 1 can be effectively controlled, and the matching degree between the pole core 2, the electrode tab 21 and the like and the pit 11 of the aluminum plastic film 1 is improved, which may not only prevent the arc-shaped transition region 22 of the tab 21 from being stressed, but also effectively constrain the movement of the pole core 2 in the pit 11, thereby improving the safety performance and life of the battery as a whole.

In an embodiment, as shown in FIG. 4 to FIG. 6, the first distance a is 2 to 6 times longer than the second distance b. Preferably, the first distance a is between 1mm and 3mm, and the second distance b is between 0.5mm and 1mm.

In particular, the first distance a is set to be 2 to 6 times longer than the second distance b, which not only may prevent the pole core 2 from moving in the pit 11 of the aluminum plastic film 1, but also may prevent the extrusion of the pit 11 of the aluminum plastic film 1 to the arc-shaped transition region 22 formed at the joint of the pole core 2 and the tab 21, thereby improving the safety performance and life of the battery.

In an embodiment, if the first distance a is too small, that is, the slope formed relative to the X direction is steeper, after the pole core 2 is placed into the pit 11, the tab 21 connected to the pole core 2 is subjected to some supporting force from the aluminum plastic film 1, so that the joint of the tab 21 and the pole core 2 still has a risk of being extruded. If the first distance a is too large, that is, the slope formed relative to the X direction is gentler, so that the performance for forming a punching pit in the aluminum plastic film 1 will be poor, and finally the packaging of the battery is affected. The size of the first distance a is defined as between 1mm and 3mm, such as 1mm, 2mm or 3mm, etc., and this value range may slow down the slope relative to the X direction of the first side elevation 17a of the aluminum plastic film 1 extending along the X direction, but not be too gentle, so that the slope of the punching pit may match the shape of the arc-shaped transition region 22 of the tab 21, reducing the stress of the tab 21 in the battery, and improving the safety performance of the battery.

In addition, if the second distance b is too small, it may be difficult for the pole core 2 to be placed into the pit 11 when the battery is assembled, which reduces the assembly efficiency, and may also cause conditions such as extrusion of the pole core 2, which affects the safety performance of the battery. If the second distance b is too large, the pit 11 of the aluminum plastic film 1 will have a poor forming performance during punching, and finally the packaging effect of the battery is also affected. In this embodiment, the size of the second distance b is limited between 0.5mm and 1mm, such as 0.5mm, 0.6mm, 0.8mm, 1mm, etc., and this value range may improve the slope of the second side elevation 17b extending in the X direction relative to the Z direction, so as to improve the matching degree between the pole core 2 and the pit 11 of the aluminum plastic film 1 in the Z direction, so that the aluminum plastic film 1 may constrain the pole core 2, preventing the pole core 2 from moving in the pit 11, and further improving the safety performance of the battery.

In an embodiment, referring to FIG. 5 to FIG. 6, the radius of the first lower arc chamfer 14a is 1.5 to 3 times the size of the radius of the first upper arc chamfer 13a; and/or the radius of the second lower arc chamfer 14b is 1.5 to 3 times the size of the radius of the second upper arc chamfer 13b.

In particular, in this embodiment, after the pole core 2 with the electrode tab 21 is placed into the pit 11 of the aluminum plastic film 1, the first upper arc chamfer 13a is located at the joint of the pole core 2 and the tab 21, and the radius of the first upper arc chamfer 13a may refer to the size of the arc-shaped transition region of the tab 21, in order to reduce extrusion of the electrode tab 21. The first lower arc chamfer 14a is located at the bottom edge of the pole core 2, and the size of the first lower arc chamfer 14a may refer to the shape and size of the edge of the pole core 2 to improve the matching degree between the pole core 2 and the pit 11. In combination with the parameters in the above two aspects, the radius of the first lower arc chamfer 14a is set to be 1.5 to 3 times the size of the radius of the first upper arc chamfer 13a, so that the aluminum plastic film 1 can be easily formed, and the pit punching efficiency is improved.

In an embodiment, with reference to FIG. 5 to FIG. 6, the radius of the first upper arc chamfer 13a is between 1mm and 2mm, and the radius of the first lower arc chamfer 14a is between 1.5mm and 3mm; and/or the radius of the second upper arc chamfer 13b is between 1mm and 2mm, and the radius of the second lower arc chamfer 14b is between 1.5mm and 3mm.

In particular, the aluminum plastic film 1 generally comprises three layers, i.e., an outermost nylon layer, a middle aluminum layer and an innermost polypropylene layer. The polypropylene layer is corrosion-resistant and can separate the electrolyte of the battery from the aluminum layer to prevent battery leakage. When punching the aluminum plastic film 1 to form the pit 11, the aluminum plastic film 1 will be stretched, the aluminum layer located at the upper arc chamfer 13 or the lower arc chamfer 14 will be stretched and thinned, and the polypropylene layer with corrosion resistance inside will also be stretched and easily damaged. Therefore, by setting the radius of the upper arc chamfer 13 between 1mm and 2mm, the damage to the polypropylene layer during pit punching will be reduced, and when the aluminum plastic film 1 is heat-sealed, the influence of heat radiation on these areas can be reduced, thereby improving the corrosion resistance of the battery. Correspondingly, the radius of the lower arc chamfer 14 may be set to between 1.5mm to 3mm to improve the forming capability of the aluminum plastic film 1.

In an embodiment, as shown in FIG.1 to FIG. 2, the included angles formed by the intersecting first side elevation 17a, the second side elevation 17b, and the bottom surface 16 are spherical angles 15. The radius of the spherical angle 15 is 3 to 6 times the size of the radius of the first upper arc chamfer 13a, or the radius of the spherical angle 15 is 2 to 4 times the size of the radius of the first lower arc chamfer 14a; and/or the radius of the spherical angle 15 is 3 to 6 times the size of the radius of the second upper arc chamfer 13b, or the radius of the spherical angle 15 is 2 to 4 times the size of the radius of the second lower arc chamfer 14b.

In particular, in the embodiment, an included angle is formed at the intersection of the bottom surface 16, the first side elevation 17a, and the second side elevation 17b. The included angle is set as a spherical angle 15, and the radius of the spherical angle 15 is set to be 3 to 6 times the size of the radius of the first upper arc chamfer 13a, or 2 to 4 times the size of the radius of the first lower arc chamfer 14a; and/or the radius of the spherical angle 15 is set to be 3 to 6 times the size of the radius of the second upper arc chamfer 13b, or 2 to 4 times the size of the radius of the second lower arc chamfer 14b. In this way, when the aluminum plastic film 1 is formed by pit punching, after the aluminum layer is stretched, the residual amount of the aluminum layer in each stretched region can be ensured above the 50% safety value, which ensures the thickness requirement of the aluminum layer, and when the battery is impacted by mechanical vibration, it can reduce the risk of battery leakage and improve the safety performance and the service life of the battery.

In an embodiment, when the depth of the pit 11 is between 8mm and 12 mm, the second distance b is between 1mm and 1.5mm, and the radius of the second upper arc chamfer 13b is between 1.5mm and 2mm.

In particular, in this embodiment, the depth of the pit 11 of the aluminum plastic film 1 may generally be set to below 12mm to ensure the pit punching forming quality of the aluminum plastic film 1 and final assembly efficiency. The depth of the pit 11 may refer to the Y direction in FIG.1 or FIG. 3. The Y direction is perpendicular to the bottom surface 16 of the pit 11, and the X direction, the Y direction, and the Z direction are perpendicular to each other. At this time, with the depth of the pit 11 increases, the first upper arc chamfer 13a, the second upper arc chamfer 13b, the first lower arc chamfer 14a, the second lower arc chamfer 14b, the first distance a, and the second distance b also increase accordingly. Among them, the value range of the second distance b and the second upper arc chamfer 13b both affect the matching degree between the pole core 2 and the pit 11. When the depth of the pit 11 is between 8mm and 12mm, the range of the second distance b will be set to between 1mm and 1.5mm, and the radius of the second upper arc chamfer 13b will be set to between 1.5mm and 2mm, which can not only ensure the safe thickness of the residual aluminum layer after the pit is punched, but also make the aluminum plastic film 1 have better formability. In addition, the radius of the first lower arc chamfer 14a may be matched with the radius of the first upper arc chamfer 13a, and the range of the first distance a may be matched with the range of the second distance b, thereby further improving the safety performance of the battery.

In an embodiment, when the depth of the pit 11 is less than or equal to 8mm, the second distance b is between 0.5mm and 1mm, and the radius of the second upper arc chamfer 13b is between 1mm and 1.5mm.

In particular, in the embodiment, the depth of the pit 11 of the aluminum plastic film 1 may be controlled below 8mm to further improve the formability of the aluminum plastic film 1. Ensuring that the range of the second distance b is between 0.5mm and 1mm, and the radius of the second upper arc chamfer 13b is between 1mm and 1.5 the residual amount of the aluminum layer will be thicker after the aluminum plastic film 1 is punched, thereby improving the mechanical impact resistance of the aluminum plastic film 1.

In an embodiment, as shown in FIG. 2, a first surface is provided between the first upper arc chamfer 13a and the first lower arc chamfer 14a on the first side elevation 17a, and the first surface is a flat surface. A second surface is provided between the second upper arc chamfer 13b and the second lower arc chamfer 14b on the second side elevation 17b, and the second surface is a flat surface.

In particular, in this embodiment, the first surface is disposed between the first upper arc chamfer 13a and the first lower arc chamfer 14a, and the second surface is disposed between the second upper arc chamfer 13b and the second lower arc chamfer 14b. Both of the first surface and the second surface are flat surfaces, so that the pole core 2 can be placed in the pit 11 more smoothly, thereby improving assembly efficiency.

In an embodiment, as shown in FIG. 5 and FIG. 7, the first included angle α between the first surface and the bottom surface 16 is smaller than the second included angle β between the second surface and the bottom surface 16.

In particular, in this embodiment, the first included angle α between the first surface 18a and the bottom surface 16 is smaller than the second included angle β between the second surface 18b and the bottom surface 16, so that the state of the pole core 2 in the pit 11 of the aluminum plastic film 1 can be effectively controlled, and the matching degree between the pole core 2, the electrode tab 21 and the like and the pit 11 of the aluminum plastic film 1 is improved, which may not only prevent the arc-shaped transition region 22 of the tab 21 from being stressed, but also effectively constrain the movement of the pole core 2 in the pit 11, thereby improving the safety performance and life of the battery as a whole.

In order to make the technical effect of the above solution more obvious, taking a 85A/h power battery as an example, a sample with the dimensions in Table 1 is selected for the aluminum plastic film 1 for description. Among the samples in the table, Sample 2, Sample 5, Sample 8 and Sample 11 conform to the size range of the pit 11 in the present application.

The 50% residual yield rate of the aluminum layer after punching means that after punching, the residual amount of the aluminum layer of the aluminum-plastic film 1 can reach more than 50% of the thickness of the aluminum-plastic film 1 before punching. The forming appearance OK means that the forming effect after one-time pit punching meets the expected requirement and the forming appearance NG means that the forming effect after one-time pit punching does not meet the expected requirement. The difficulty of entering the pit refers to the difficulty of placing the pole core in the pit 11 during assembly.

**Table 1 is a comparison table of forming results of aluminum plastic films of various sizes.**

| Sample | Second upper arc chamfer 13b radius / mm | Second distance b Size / mm | Pit depth / mm | Pit Aluminum Layer 50% Residual Yield | Formed appearance | Difficulty degree for pit entering |
|---|---|---|---|---|---|---|
| 1 | 1 | 0.3 | 6 | 90% | OK | Difficult |
| 2 | 1 | 0.5 | 6 | 100% | OK | Easy |
| 3 | 1 | 2 | 6 | 100% | NG | Easy |
| 4 | 0.5 | 0.5 | 6 | 95% | OK | Easy |
| 5 | 1 | 0.5 | 6 | 100% | OK | Easy |
| 6 | 2 | 0.5 | 6 | 100% | NG | Easy |
| 7 | 2 | 0.5 | 10 | 85% | OK | Easy |
| 8 | 2 | 1.5 | 10 | 100% | OK | Easy |
| 9 | 2 | 2 | 10 | 100% | NG | Easy |
| 10 | 0.5 | 1.5 | 10 | 98% | OK | Easy |
| 11 | 2 | 1.5 | 10 | 100% | OK | Easy |
| 12 | 3 | 1.5 | 10 | 100% | NG | Easy |

It can be seen from Table 1 that when the depth of pit punching of the pit 11 of the aluminum plastic film 1 is 6mm, that is, when the depth of the pit 11 is less than or equal to 8mm, the second distance b of the sample 2 and the sample 5 are both between 0.5mm and 1mm, and the values of the radius of the second upper arc chamfer 13b are both between 1mm and 1.5mm, which not only ensures the residual aluminum thickness of the pit punching meets the requirement (both 100%), but also has a good forming appearance and an assembly effect of being easy to enter the pit. When the second distance b is smaller (the sample 1 is 0.3mm), the yield of the residual aluminum thickness in the pit is significantly reduced, and it leads to the problem that it is difficult for the pole core 2 to enter the pit. When the size of the second distance b is larger (the sample 3 is 2mm), the forming appearance effect is poor. When the radius of the upper arc chamfer 13 is smaller (the sample 4 is 0.5 mm), the yield of the pit residual aluminum thickness is significantly reduced. When the radius of the second upper arc chamfer 13b is larger (the sample 6 is 2mm), the effect of the forming appearance thereof is poor.

When the pit depth of the pit 11 of the aluminum plastic film 1 is 10 mm, that is, when the depth of the pit 11 is between 8mm and 12 mm, the second distance b of the sample 8 and the sample 11 is between 1mm and 1.5 mm, and the radius of the second upper arc chamfer 13b is between 1.5mm and 2 mm, which not only ensures that the residual aluminum thickness of the pit meets the requirement (both are 100%), but also has a good forming appearance and an assembly effect of being easy to enter the pit. When the second distance b is larger (sample 9 is 2mm), although the yield of the residual aluminum thickness of the pit is better, the quality of the formed appearance is poor. When the second pitch b is smaller (the sample 7 is 0.5mm), the yield of the pit residual aluminum thickness is significantly reduced. When the radius of the second upper arc chamfer 13b is smaller (the sample 10 is 0.5mm), the yield of the residual aluminum thickness in the pit is poor. When the radius of the second upper arc chamfer 13b is larger (the sample 12 is 3mm), the forming appearance effect is poor.

It can be seen from the above analysis that as the depth of the pit is increased, the first upper arc chamfer 13a, the second upper arc chamfer 13b, the first lower arc chamfer 14a, the second lower arc chamfer 14b, the first distance a, and the second distance b also increase accordingly. In the corresponding depth range of pit punching, the appropriate size of the second distance b and the radius of the second upper arc chamfer 13b are selected, which not only ensures that the residual aluminum thickness of the pit punching meets the requirement, but also has a good forming appearance and an assembly effect of being easy to enter the pit.

According to the second aspect of the application, a battery is provided, as shown in FIG.3 to FIG.8, including: a pole core 2 and the aluminum plastic film 1. Referring to FIG.8, two ends of the pole core 2 are provided with a tab 21 respectively, and an arc-shaped transition region 22 is formed on the tab 21 at the end which is close to the pole core 2. Referring to FIG. 6, the pole core 2 is located in the pit 11, and the arc-shaped transition region 22 is faced to the first side elevation 17a of the pit 11 extending in the Z direction.

In particular, in this embodiment, a battery is provided, as shown in FIG. 3, the aluminum plastic film 1 of which has the structure provided in the first aspect. When assembling the battery, generally, the pole core 2 is placed into the pit 11 of the aluminum plastic film 1, and the tab thereof is placed along the X direction, so that the arc-shaped transition region 22 may be faced to the first side elevation 17a of the pit 11 extending in the Z direction. Since the first distance a is provided in the X direction, the arc-shaped transition region 22 of the tab 21 in the Z direction can be matched with the pit 11 on the aluminum plastic film 1. The pit 11 is provided with a second distance b in the Z direction, so that the pole core 2 and other edges may also match the pit 11 of the aluminum plastic film 1. After assembly and matching, the aluminum plastic film 1 is wrapped outside the pole core 2, then the aluminum plastic film 1 is heat-sealed, and finally an electrolyte is injected between the aluminum plastic film 1 and the pole core 2.

According to the aluminum plastic film 1 in the application, the first distance a is formed in the X direction between the lower edge 130a of the first upper arc chamfer 13a of the pit 11 and the upper edge 140a of the first lower arc chamfer 14a, and the second distance b is formed in the Z direction between the lower edge 130b of the second upper arc chamfer 13b of the pit 11 and the upper edge 140b of the second lower arc chamfer 14b, so that the matching performance of the pole core 2 and the aluminum plastic film 1 is improved. In addition, the first distance a is greater than the second distance b, for example, the first distance a is set to be 2 to 6 times longer than the second distance b, so that the state of the pole core 2 in the aluminum plastic film 1 can be effectively controlled, not only can reduce the extrusion force at the joint of the pole core 2 and the tab 21, that is, the arc-shaped transition region 22, but also effectively restrain the pole core 2 from moving in the aluminum plastic film 1, thereby improving the safety performance of the battery.

In an embodiment, as shown in FIG.6 and FIG.7, one end of the arc-shaped transition region 22 is connected to the pole core 2, and the other end is in contact with the first side elevation 17a.

In particular, one end of the arc-shaped transition region 22 is connected to the pole core 2, and the other end of the arc-shaped transition region 22 is in contact with the first side elevation 17a, so that the arc-shaped transition region 22 can be prevented from being stressed, and the pole core 2 can be effectively restrained from moving in the pit 11, improving the safety performance and the service life of the battery as a whole.

In an embodiment, a gap 20 is provided between the arc-shaped transition region 22 and the first side elevation 17a.

In particular, since a gap 20 is provided between the arc-shaped transition region 22 and the first side elevation 17a, the arc-shaped transition region 22 is not attached to the first side elevation 17a, so that the arc-shaped transition region 22 can be prevented from being stressed.

In an embodiment, an extension region 24 is formed on an end of the tab 21 and away from the pole core 2. One end of the extension region 24 is in contact with the first side elevation 17a, and the other end is located on the flanging 12.

In particular, the extension region 24 is formed on an end of the tab 21 and away from the pole core 2. One end of the extension region 24 is in contact with the first side elevation 17a, and the other end is located on the flanging 12, so that the pole core 2 can be effectively restrained from moving in the pit 11, and the matching degree between the extension region 24 and the flanging 12 can be improved.

In an embodiment, the battery includes two aluminum plastic films 1, and the two aluminum plastic films 1 are fastened and wrapped outside the pole core 2.

In particular, the battery can be packaged by using a single aluminum plastic film 1 and one aluminum plastic film piece to package the pole core 2, that is, single-pit packaging. Alternatively, as described in this embodiment, two aluminum plastic films 1 are used to fasten and package the pole core 2, that is, double-pit packaging. The double-pit packaging can reduce the depth of the pit 11 of the aluminum plastic film 1 and is easy for pit punching.

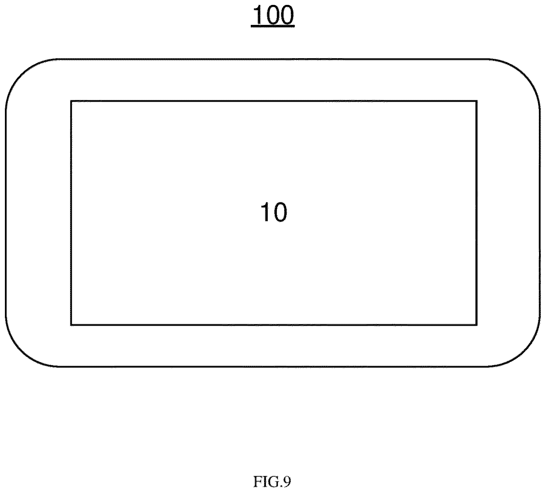

According to a third aspect of the present disclosure, a vehicle 100 is provided, as shown in FIG.9, including the above battery 10.

The above embodiments focus on differences between the embodiments, and different optimization features between the embodiments can be combined to form a better embodiment as long as they do not contradict, which will not be described herein again in consideration of brevity.

Although some embodiments of the present application have been described in detail by way of examples, those skilled in the art should understand that the above examples are only for illustration and are not intended to limit the scope of the present application. Those skilled in the art should understand that the above embodiments may be modified without departing from the scope and spirit of the present application. The scope of the present application is defined by the appended claims.

## Claims

1. An aluminum plastic film (1) of a battery, comprising:
a pit (11) configured to accommodate a pole core (2) of the battery, the pit (11) having a bottom surface (16), a first side elevation (17a) connected to the bottom surface (16) and a second side elevation (17b) connected to the bottom surface (16), wherein the first side elevation (17a) and the second side elevation (17b) are connected to each other, and a first lower arc chamfer (14a) is formed at a joint of the bottom surface (16) and the first side elevation (17a), as well as a second lower arc chamfer (14b) is formed at a joint of the bottom surface (16) and the second side elevation (17b); and
a flanging (12) located at the upper periphery rim of the pit (11), wherein the flanging (12) is connected to the upper ends of the first side elevation (17a) and the upper ends of the second side elevation (17b), and a first upper arc chamfer (13a) is formed at the joint of the first side elevation (17a) and the flanging (12), as well as a second upper arc chamfer (13b) is formed at the joint of the second side elevation (17b) and the flanging (12), wherein
in an X direction, a first distance (a) is formed between the lower edge (130a) of the first upper arc chamfer (13a) of the first side elevation(17a) and the upper edge (140a) of the first lower arc chamfer (14a); and
in a Z direction, a second distance (b) is formed between the lower edge (130b) of the second upper arc chamfer (13b) of the second side elevation (17b) and the upper edge (140b) of the second lower arc chamfer (14b), and the first distance (a) is longer than the second distance (b); wherein
the X direction is an extension direction of a tab (21) of the battery when the pole core (2) of the battery is located in the pit (11), and the Z direction is perpendicular to the X direction.

2. The aluminum plastic film (1) of a battery according to claim 1, wherein the first distance (a) is 2 to 6 times longer than the second distance (b).

3. The aluminum plastic film of the battery according to claim 1 or 2, wherein the first distance (a) is between 1mm and 3mm, and the second distance (b) is between 0.5mm and 1mm.

4. The aluminum plastic film (1) of a battery according to any one of claims 1 to 3, wherein the radius of the first lower arc chamfer (14a) is 1.5 to 3 times the size of the radius of the first upper arc chamfer (13a); and / or
the radius of the second lower arc chamfer (14b) is 1.5 to 3 times the size of the radius of the second upper arc chamfer (13b).

5. The aluminum plastic film (1) of a battery according to any one of claims 1 to 4, wherein the radius of the first upper arc chamfer (13a) is between 1mm and 2mm, and the radius of the first lower arc chamfer (14a) is between 1.5mm and 3mm; and / or
the radius of the second upper arc chamfer (13b) is between 1mm and 2mm, and the radius of the second lower arc chamfer (14b) is between 1.5mm and 3mm.

6. The aluminum plastic film (1) of a battery according to any one of claims 1 to 5, wherein included angles formed by the intersecting first side elevation (17a), the second side elevation (17b) and the bottom surface (16) are spherical angles (15), and the radius of the spherical angle (15) is 3 to 6 times the size of the radius of the first upper arc chamfer (13a), or the radius of the spherical angle (15) is 2 to 4 times the size of the radius of the first lower arc chamfer (14a); and /or
the radius of the spherical angle (15) is 3 to 6 times the size of the radius of the second upper arc chamfer (13b), or the radius of the spherical angle (15) is 2 to 4 times the size of the radius of the second lower arc chamfer (14b).

7. The aluminum plastic film (1) of a battery according to any one of claims 1 to 6, wherein when the depth of the pit (11) is between 8mm and 12mm, the second distance (b) is between 1mm and 1.5mm, and the radius of the second upper arc chamfer (13b) is between 1.5mm and 2mm.

8. The aluminum plastic film (1) of a battery according to any one of claims 1 to 6, wherein when the depth of the pit (11) is less than or equal to 8mm, the second distance (b) is between 0.5mm and 1mm, and the radius of the second upper arc chamfer (13b) is between 1mm and 1.5mm.

9. The aluminum plastic film (1) of a battery according to any one of claims 1 to 8, wherein a first surface is disposed between the first upper arc chamfer (13a) and the first lower arc chamfer (14a) on the first side elevation (17a), and the first surface is a flat surface.

10. The aluminum plastic film (1) of a battery according to any one of claims 1 to 9, wherein a second surface is disposed between the second upper arc chamfer (13b) and the second lower arc chamfer (14b) on the second side elevation (17b), and the second surface is a flat surface.

11. The aluminum plastic film (1) according to claim 10, wherein the first included angle (α) between the first surface (18a) and the bottom surface (16) is smaller than the second included angle (β) between the second surface (18b) and the bottom surface (16).

12. A battery (10), comprising:
a pole core (2); and
the aluminum plastic film (1) according to any one of claims 1 to 11, wherein
both ends of the pole core (2) are provided with a tab (21) respectively, and an arc-shaped transition region (22) is formed on the tab at the end which is close to the pole core (2);
the pole core (2) is located in the pit (11), and the arc-shaped transition region (22) is faced to the first side elevation (17a) of the pit (11).

13. The battery (10) according to claim 12, wherein the battery (10) comprises two aluminum plastic films (1), and the two aluminum plastic films (1) are buckled together and wrapped outside of the pole core (2).

14. A vehicle (100) comprising the battery (10) according to claim 12 or 13.
